# EUROPÄISCHE PATENTSCHRIFT

(11) **EP 1 793 151 B1**
(45) Veröffentlichungstag und Bekanntmachung des Hinweises auf die Patenterteilung: **25.06.2008**
(21) Anmeldenummer: 07005232.9
(22) Anmeldetag: 14.04.2005
(51) Int. Cl.: F16L 3/015, F16G 13/16, H02G 11/00

(54) **Leitungsverbund**
Line-coupling
Couplage de ligne

(43) Veröffentlichungstag der Anmeldung: 06.06.2007
(62) Teilanmeldung aus: 05008161.1
(73) Patentinhaber: ekd gelenkrohr GmbH, 40699 Erkrath (DE)
(72) Erfinder: Klein, Ernst, 40625 Düsseldorf (DE)
(74) Vertreter: Albrecht, Rainer Harald

(56) Entgegenhaltungen:
- DE-A1- 1 449 670
- DE-A1- 19 617 900
- US-A- 3 160 175
- US-A- 4 658 577
- US-A- 6 061 880
- "TRENDS IN CABLE FASTENING TECHNIQUE" DESIGN ENGINEERING, MORGAN-GRAMPIAN LTD. LONDON, GB, Bd. 232, Mai 1980 (1980-05), Seiten 42-43, XP002064293 ISSN: 0308-8448

## Beschreibung

Die Erfindung betrifft einen Leitungsverbund aus mindestens zwei parallelen flexiblen Leitungen, die sich im Verbund axial zueinander verschieben können. Der Begriff "Leitungen" umfasst im Rahmen der Erfindung Kabel und Schläuche aller Art. Insbesondere fallen unter den Begriff energieführende Leitungen, zum Beispiel ein- oder mehradrige elektrische Leitungen, Fluidleitungen, Lichtleiterkabel, Koaxialkabel und dergleichen.

Aus DE-U 295 02 257 ist ein gewebter Leitungsverbund bekannt, in dem nebeneinander liegende Leitungen integriert sind. Der bekannte Leitungsverbund ist für eine ortsfeste Verlegung von elektrischen Leitungen bestimmt und weist eine für die Verlegung vorteilhafte hohe Biegewechselverträglichkeit und gute Verformbarkeit auf, da kein kontinuierlicher Materialfluss zwischen den Adern bzw. Leitungen besteht und sich benachbarte Leitungen im Gewebe frei gegeneinander verschieben können. Für Leitungen, die beispielsweise an einem Roboterarm oder einer Maschine einen orts- oder maschinenfesten Anschluss mit einem beweglichen Anschluss verbinden, ist der Leitungsverbund nicht geeignet, denn er weist keine ausreichende Stabilität auf, um die parallel nebeneinander verlegten Leitungen in der gewünschten Ordnung zu halten. Es besteht die Gefahr, dass die parallel verlegten Leitungen sich beim Betrieb unkontrolliert gegeneinander verdrehen.

In der Druckschrift DE 14 49 670 wird eine Rohrgliederführung beschrieben, die energieführende Leitungen zwischen beweglichen Maschinenteilen und ortsfesten Anschlüssen führt. Die beschriebene Rohrgliederführung umfasst eine Mehrzahl von Rohrabschnitten, die gelenkig ineinander greifen. Es können auch mehrere Rohrgliederführungen parallel zueinander angeordnet sein, wobei die einzelnen Rohrführungsstränge miteinander verbunden sind.

Die Druckschrift US 4,658,577 stellt eine selbsttragende Energieführungskette dar, die aus einer Mehrzahl von einzelnen Kettengliedern einen Kabelkanal bildet, in dem ein Kabel aufgenommen und vollständig umschlossen ist. Die einzelnen Kettenglieder sind einachsig schwenkbar miteinander verbunden, so dass die Energieführungskette nur in einer Richtung auslenkbar ist. Eine Bewegungsfreiheit in mehr als eine Raumachse ist ebenso wenig vorgesehen wie ein Verbund aus mehreren Energieführungsketten, die parallel miteinander verbunden sind.

Die Druckschrift DE 196 17 900 offenbart eine in mehreren Achsen biegsame Energieführungskette aus gelenkig miteinander verbundenen Kettengliedern. Die Kettenglieder weisen zwei Außenschalen auf, die durch einen Steg miteinander verbunden sind und den Kabelraum umfangsseitig begrenzen sowie einen Kabelführungsspalt aufweisen. Die einzelnen Kettenglieder umfassen ferner zwei Gelenkteile, die parallel zur Längsachse der Energieführungskette an dem Steg angeordnet sind, wobei jeweils zwei Gelenkteile von benachbarten Kettengliedern ineinander gerastet sind.

Die US 6,061,880 beschreibt eine Schlauchschellenanordnung zur Befestigung von mehreren Wasserleitungen an einem Abfluss- oder Belüftungsrohr. Die beschriebene Schlauchschellenanordnung umfasst eine große Schlauchschelle, in der das Abschluss- oder Belüftungsrohr aufgenommen ist und weitere, kleine Schlauchschellen, mit denen die Wasserleitungen aufgenommen sind. An den einzelnen Schlauchschellen sind T-Nute bzw. T-förmige Ansätze angeformt, mit denen die nebeneinander liegenden Schlauchschellen zu verbinden sind, um parallel verlaufende Leitungen gegen Verrutschen zu sichern. Die beschriebene Schlauchschellenanordnung ist zur Verbindung von Leitungen vorgesehen, um diese sicher und ortsfest zu verlegen.

Die Druckschrift US 3,160,175 beschreibt eine Endkappe für eine ortfest verlegte Rohrleitung. Mit der beschriebenen Endkappe ist einerseits die Rohrleitung verschließbar. Andererseits sind mehrere Rohrleitungen in einem vorgewählten Abstand miteinander verbindbar. Um einzelne Rohrleitungen miteinander zu verbinden, sind an der beschriebenen Endenkappe eine profilierte Nut und ein profilierter Ansatz angeformt. Nut und Ansatz sind mit entsprechend zugeordneten Nuten bzw. Ansätzen von nebeneinander angeordneten Endenkappen korrespondierend, so dass Nut und Ansatz ineinandergreifen.

Der Stand der Technik sieht für Leitungen, die an Roboterarmen geführt werden müssen, Energieführungsketten aus mehraxial schwenkbaren Kettengliedern vor. Energieführungsketten, die mehrachsige Bewegungen zulassen, sind in der Fertigung aufwändig und teuer. Häufig erzielt man mit solchen Energieführungsketten auch nicht den gewünschten Effekt, einerseits die Leitungen in bestimmten Bereichen richtungsstabil zu führen und gleichzeitig in anderen Bereichen die hier erforderliche Flexibilität zu gewährleisten. Ferner besteht bei diesen Ketten keine Möglichkeit, nach Ausschöpfung des vorhandenen Kettenquerschnitts zusätzliche Leitungen aufzunehmen.

Aus der Praxis ist eine Vielzahl von Möglichkeiten bekannt, um mehrere einzelne Leitungen zu einem Leitungsverbund zu verbinden. Dies sind insbesondere unterschiedliche Ausführungen von Kabeibindern, Klippverbindungen und Kabelführungen, welche oftmals nur schwer lösbar sind und ein unkontrolliertes Verdrehen der einzelnen Leitungen nicht verhindern können.

Der Erfindung liegt die Aufgabe zugrunde, einen Leitungsverbund aus parallel nebeneinander angeordneten flexiblen Leitungen anzugeben, der bogenförmige Bewegungen um alle drei Raumachsen zulässt, aber eine Verdrehung oder Verdrallung einzelner Leitungen des Verbundes um deren Längsachse sicher verhindert. Der Leitungsverbund soll nahezu beliebigen Bewegungen eines Maschinenteils folgen können und dabei stets eine parallele Ausrichtung der Leitungen gewährleisten. Der Leitungsverbund soll auch nachträglich noch durch Zufügen weiterer Leitungen nahezu unbegrenzt erweiterbar sein.

Gegenstand der Erfindung und Lösung dieser Aufgabe ist ein Leitungsverbund nach Anspruch 1. Bevorzugte Ausgestaltungen des erfindungsgemäßen Leitungsverbundes werden in den Ansprüchen 2 bis 4 beschrieben. Eine weitere erfindungsgemäße Ausführung des Leitungsverbundes zur Lösung der beschriebenen Aufgabe ist Gegenstand des Anspruches 5.

Erfindungsgemäß sind an den Leitungen Verbindungselemente befestigt oder angeformt, die den Verbund zwischen den Leitungen herstellen und nur axiale Relativbewegungen zwischen benachbarten Leitungen zulassen. Der erfindungsgemäße direkte Leitungsverbund gleicht einem mehradrigen Flachkabel, bei dem jedoch die einzelnen Adern bzw. Leitungen in Leitungsrichtung jeweils gegeneinander verschiebbar sind. Die Leitungen sind ausschließlich axial zueinander verschiebbar. Durch die an den Leitungen vorgesehenen Verbindungselemente weist der Verbund gleichzeitig eine große Torsionsfähigkeit auf. Für die konstruktive Ausgestaltung ergeben sich eine Vielzahl von Möglichkeiten. So sind Konstruktionsvarianten möglich, bei denen die Verbindungselemente als Teil des Leitungsmantels oder der Schlauchwand ausgeformt sind.

Das erfindungsgemäße Funktionsprinzip, dass die an benachbarten Leitungen angeordneten oder befestigten Verbindungselemente formschlüssig ineinandergreifen und in Längsrichtung der Leitungen gegeneinander verschiebbar sind, lässt sich dadurch realisieren, dass die Verbindungselemente an dem Mantel der Leitungen einteilig angeformt sind. Die Verbindungselemente weisen zweckmäßig ein T-förmiges Anschlussprofil in Form einer T-förmigen Nut und/oder eines korrespondierenden T-förmigen Vorsprungs oder andere Geometrien mit linearer Führungsfunktion auf. Die Verbindungselemente erstrecken sich als Strangformerzeugnis über die gesamte Leitungslänge in Längsrichtung der Leitungen.

Die Verbindungselemente können auch an einem biegsamen Schutzschlauch angeformt sein, der einen Aufnahmeraum für energieführende Leitungen bildet. Der Schutzschlauch ist beispielsweise als Wellschlauch ausgebildet, in den eine energieführende Leitung eingezogen werden kann.

Eine weitere Ausführungsform der Erfindung sieht vor, dass die Verbindungselemente an einem Überzugsschlauch angeformt sind, der auf einer energieführenden Leitung fest haftet. Der Überzugschlauch ist als Schrumpfschlauch ausführbar oder besteht aus einer Folie, die mit überlappenden Randbereichen an den Mantel einer energieführenden Leitung angelegt und mittels einer Siegelnaht an den überlappenden Randbereichen schlauchförmig geschlossen wird.

Im Folgenden wird die Erfindung anhand einer lediglich ein Ausführungsbeispiel darstellenden Zeichnung erläutert. Es zeigen schematisch
- Fig. 1: einen Leitungsverbund aus mehreren parallelen Leitungen in einer perspektivischen Darstellung,
- Fig. 2 bis 4: erfindungsgemäße Ausgestaltungen des Leitungsverbundes, jeweils im Querschnitt.

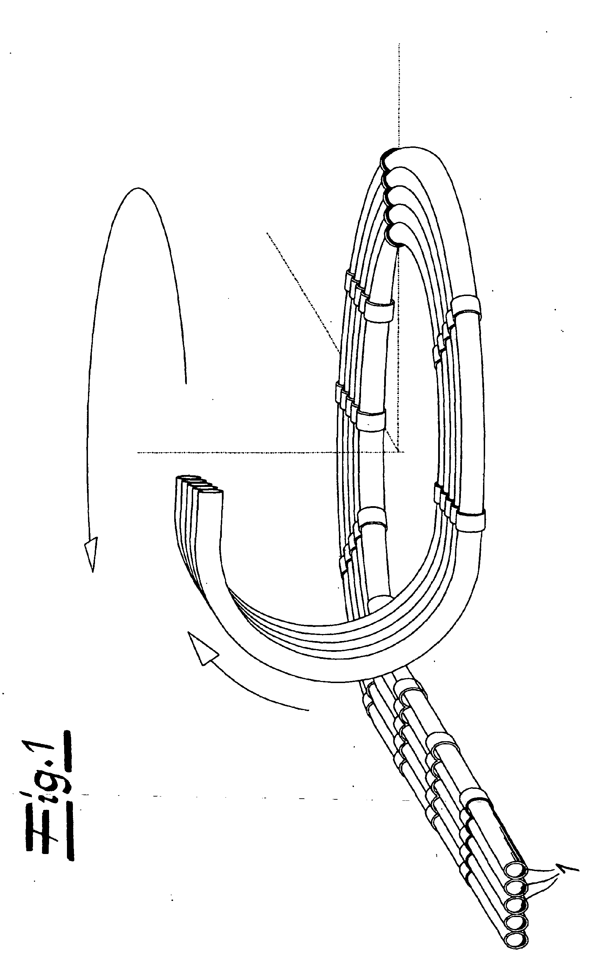

Der in Fig. 1 dargestellte Leitungsverbund weist mehrere parallele flexible Leitungen 1 auf. Unter den Begriff "Leitungen" sollen Kabel und Schläuche aller Art fallen. Unter den Begriff fallen insbesondere energieführende Leitungen, beispielsweise ein- oder mehradrige elektrische Leitungen, Fluidleitungen, Lichtleiterkabel, Koaxialkabel und ähnliches. Die Leitungen 1 können sich im Verbund axial zueinander verschieben. Der Leitungsverbund kann dadurch unter Beibehaltung einer vorgegebenen Richtungsstabilität nahezu beliebige Bewegungen im Raum vollziehen und gewährleistet dabei immer eine geordnete, verdrallfreie Führung der Leitungen. Der Leitungsverbund ist für eine Verlegung von Leitungen geeignet, die einen orts- oder maschinenfesten Anschluss mit einem beweglichen Maschinenteil verbinden. Insbesondere ist der Leitungsverbund auch für die Parallelführung von Leitungen an mehrachsigen Maschinen und Roboterarmen geeignet.

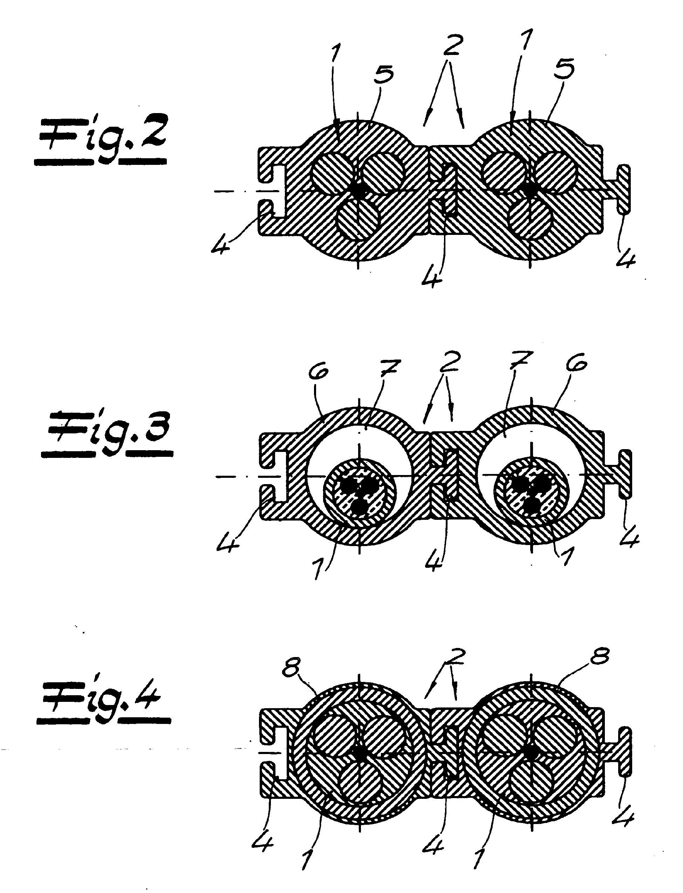

Die in den Fig. 2 bis 4 dargestellten erfindungsgemäßen Ausführungen beruhen auf dem Prinzip, dass die an benachbarten Leitungen angeordneten oder befestigten Verbindungselemente 2 formschlüssig ineinandergreifen und in Längsrichtung der Leitungen 1 gegeneinander verschiebbar sind. In Fig. 2 sind die Verbindungselemente 2 an dem Mantel 5 energieführender Leitungen einteilig angeformt. Im Ausführungsbeispiel der Fig. 3 sind die Verbindungselemente 2 an einem biegsamen Schutzschlauch 6, beispielsweise einem Wellschlauch, angeformt, der einen Aufnahmeraum 7 für eine energieführende Leitung 1 bildet. Gemäß der Ausgestaltung in Fig. 4 sind die Verbindungselemente 2 an einem Überzugsschlauch 8 angeformt, der auf einer energieführenden Leitung 1 fest haftet. Der Überzugsschlauch 8 ist beispielsweise ein Schrumpfschlauch oder besteht aus einer Folie, die mit überlappenden Randbereichen an eine energieführenden Leitung angelegt und mittels einer Siegelnaht an den überlappenden Randbereichen schlauchförmig geschlossen wird. Der Überzugsschlauch 8 kann auch durch Kleben auf der Leitung befestigt werden. Bei allen beschriebenen Ausführungen weisen die Verbindungselemente 2 ein T-förmiges Anschlussprofil 4 in Form einer T-förmigen Nut und/oder eines korrespondierenden T-förmigen Vorsprungs oder andere Geometrien mit linearer Führungsfunktion auf. Die Nut/Federgeometrien lassen axiale Relativbewegungen der Leitungen 1 zueinander zu.

## Patentansprüche

1. Leitungsverbund mit mindestens zwei parallelen flexiblen, energieführenden Leitungen, die einen orts- oder maschinenfesten Anschluss mit einem beweglichen Maschinenteil verbinden, wobei jede Leitung (1) in einem biegsamen Schlauch (6) angeordnet oder von einem fest haftenden Schlauch (8) umgeben ist, **dadurch gekennzeichnet,**
**dass** an die Schläuche (6, 8) eine T-Nut und/oder ein T-förmiger Vorsprung angeformt sind, die sich über die gesamte Leitungslänge erstrecken und
**dass** der T-förmige Vorsprung und die T-Nut benachbarter Schläuche formschlüssig ineinandergreifen und in Längsrichtung gegeneinander verschiebbar sind, so dass die Schläuche (6, 8) sich im Verbund axial zueinander verschieben können.

2. Leitungsverbund nach Anspruch 1, **dadurch gekennzeichnet, dass** der Schlauch (6) als Schutzschlauch in Form eines Wellschlauches ausgebildet ist.

3. Leitungsverbund nach Anspruch 1, **dadurch gekennzeichnet, dass** der Schlauch (8) ein Überzugsschlauch in Form eines Schrumpfschlauches ist.

4. Leitungsverbund nach Anspruch 1, **dadurch gekennzeichnet, dass** der Schlauch (8) aus einer Folie besteht, die mit überlappenden Randbereichen an einer energieführenden Leitung angelegt und mittels einer Siegelnaht an den überlappenden Randbereichen schlauchförmig geschlossen ist.

5. Leitungsverbund mit mindestens zwei parallelen flexiblen, energieführenden Leitungen, die einen orts- oder maschinenfesten Anschluss mit einem beweglichen Maschinenteil verbinden, **dadurch gekennzeichnet,**
**dass** an den Mantel (5) der Leitungen (1) eine T-Nut und/oder ein T-förmiger Vorsprung angeformt sind, die sich über die gesamte Leitungslänge erstrecken und
**dass** der T-förmige Vorsprung und die T-Nut benachbarter Leitungen (1) formschlüssig ineinandergreifen und in Längsrichtung gegeneinander verschiebbar sind, so dass die Leitungen (1) sich im Verbund axial zueinander verschieben können.

## Claims

1. Cable bundle comprising at least two parallel, flexible, power-conducting cables which connect a connector fixed in place locally or on a machine to a movable machine part, wherein each cable (1) is arranged in a flexible tube (6) or is surrounded by a permanently adhering tube (8), **characterised**
**in that** a T-shaped groove and/or a T-shaped protrusion are integrally formed on the tubes (6, 8) and extend along the entire length of the cable, and
**in that** the T-shaped protrusion and the T-shaped groove of adjacent tubes engage in one another with a form fit and can be displaced relative to one another in the longitudinal direction so that the tubes (6, 8) in the bundle can be displaced axially with respect to one another.

2. Cable bundle according to claim 1, **characterised in that** the tube (6) is designed as a protective tube in the form of a corrugated tube.

3. Cable bundle according to claim 1, **characterised in that** the tube (8) is a covering tube in the form of a shrink tube.

4. Cable bundle according to claim 1, **characterised in that** the tube (8) consists of a film which is placed with overlapping edge regions on a power-conducting cable and is closed by a sealing seam at the overlapping edge regions so as to form a tube.

5. Cable bundle comprising at least two parallel, flexible, power-conducting cables which connect a connector fixed in place locally or on a machine to a movable machine part, **characterised**
**in that** a T-shaped groove and/or a T-shaped protrusion are integrally formed on the sheaths (5) of the cables (1) and extend along the entire length of the cable, and
**in that** the T-shaped protrusion and the T-shaped groove of adjacent cables (1) engage in one another with a form fit and can be displaced relative to one another in the longitudinal direction so that the cables (1) in the bundle can be displaced axially with respect to one another.

## Revendications

1. Regroupement d'au moins deux lignes conductrices d'énergie parallèles flexibles reliant un raccordement stationnaire ou fixe sur une machine à une pièce mécanique en mouvement, chaque ligne (1) étant disposée dans un tuyau flexible (6) ou entourée par un tuyau (8) adhérant fixement,
**caractérisé en ce qu'**
une rainure en T et/ou une saillie en forme de T sont aménagées sur les tuyaux flexibles (6, 8) et s'étendent sur toute la longueur des lignes, et
la saillie en forme de T et la rainure en T de tuyaux flexibles voisins s'enclenchent l'une dans l'autre par complémentarité de forme et peuvent bouger l'une par rapport à l'autre dans le sens longitudinal, de manière à ce que les tuyaux flexibles (6, 8) puissent se déplacer l'un vers l'autre regroupés dans le sens axial.

2. Regroupement de lignes selon la revendication 1,
**caractérisé en ce que**
le tuyau flexible (6) est un flexible de protection en forme de tuyau flexible ondulé.

3. Regroupement de lignes selon la revendication 1,
**caractérisé en ce que**
le tuyau flexible (8) est un tuyau flexible de recouvrement en forme de tuyau flexible thermo-rétractable.

4. Regroupement de lignes selon la revendication 1,
**caractérisé en ce que**
le tuyau flexible (8) est constitué d'une feuille placée contre une ligne conductrice d'énergie dont les bords se chevauchent, et fermée par une suture de scellement sur les bords qui se chevauchent formant ainsi un tuyau flexible.

5. Regroupement d'au moins deux lignes conductrices d'énergie parallèles flexibles reliant un raccordement stationnaire ou fixe sur une machine à une pièce mécanique en mouvement,
**caractérisé en ce qu'**
une rainure en T et/ou une saillie en forme de T sont aménagées sur la gaine (5) des lignes (1) et s'étendent sur toute la longueur de celles-ci, et la saillie en forme de T et la rainure en T de lignes voisines (1) s'engagent l'une dans l'autre par complémentarité de forme et peuvent se déplacer l'une par rapport à l'autre dans le sens longitudinal de manière à ce que les lignes (1) puissent se déplacer axialement l'une vers l'autre dans le regroupement.
